# FASCICULE DE BREVET EUROPEEN

(11) **EP 0 592 298 B1**
(45) Date de publication et mention de la délivrance du brevet: **21.01.1998**
(21) Numéro de dépôt: 93402437.3
(22) Date de dépôt: 05.10.1993
(51) Int. Cl.: B01D 57/02, G01N 27/447

(54) **Procédé et dispositif de fabrication d'une plaque de gel à membrane microporeuse pour la séparation et le transfert de macromolécules par électrophorèse**
Verfahren und Vorrichtung zur Herstellung einer Gelplatte mit mikroporöser Membran zur Trennung und Übertragung von Makromolekülen durch Electroforese
Process and device for the manufacture of a microporous membrane gel plate for separating and transforming macromolecules by electrophoresis

(30) Priorité: 09.10.1992 FR 9212004
(43) Date de publication de la demande: 13.04.1994
(73) Titulaire: BERTIN & CIE, F-78373 Plaisir Cédex (FR)
(72) Inventeur: Boquet, Jean, F-78610 Le Perray en Yvelines (FR)
(74) Mandataire: Ramey, Daniel

(56) Documents cités:
- EP-A- 0 490 729
- EP-A- 0 499 546

## Description

L'invention concerne un procédé et un dispositif de fabrication d'une place de gel à membrane microporeuse pour la séparation et le transfert de macromolécules par électrophorèse, le procédé et le dispositif utilisant une cassette comprenant un cadre rectangulaire et une plaque de fond amovible, dans laquelle le gel est coulé sous forme liquide.

On a déjà proposé, dans le document EP-A-0 499 546, de couler le gel liquide sous une membrane fixée préalablement sur un cadre rectangulaire posé lui-même sur une surface plane, ce qui évite les inconvénients liés à la coulée du gel sur une membrane posée sur une surface plane, tels que la traversée de la membrane par le gel qui s'accumule sur la surface de support et la présence de bulles d'air entre la membrane et le gel.

On a également proposé, dans le document WO-A-93/01491, un procédé et un dispositif dans lesquels le gel sous forme liquide est tout d'abord coulé dans la cassette jusqu'à affleurer la face supérieure du cadre rectangulaire, après quoi on pose progressivement sur le gel et sur le cadre une membrane microporeuse sèche, on exerce une traction sur la périphérie de la membrane pour la tendre de façon sensiblement uniforme, et on laisse solidifier le gel en maintenant la membrane tendue.

Ce procédé et ce dispositif permettent de fabriquer des plaques de gel dont une face est recouverte d'une membrane microporeuse adhérente, en général de nitrocellulose ou de "nylon", et qui satisfont à un certain nombre de critères tels que l'homogénéité du gel, la constance de son épaisseur, l'absence de bulles d'air entre le gel et la membrane, la planéité de la membrane et la propreté de la face libre de celle-ci.

Ce procédé et ce dispositif permettent également d'éviter certains inconvénients de la technique antérieure, tels que le débordement du gel sur la face libre de la membrane, ou la formation de plis sur la membrane résultant de l'allongement de celle-ci lors de son imprégnation par le gel.

On a aussi proposé, dans le document EP-A-0 490 729, de couler le gel liquide sur une membrane soumise à une tension, ce qui évite ou réduit la formation de plis dans la membrane, mais n'empêche pas la traversée de la membrane par le gel et son accumulation sur la face libre de la membrane.

La présente invention a pour objet des perfectionnements aux procédés et aux dispositifs décrits dans les documents antérieurs précités, ces perfectionnements permettant de simplifier et de rendre encore plus aisée la fabrication d'une plaque de gel à membrane microporeuse.

L'invention propose donc un procédé de fabrication d'une plaque de gel à membrane microporeuse pour la séparation et le transfert de macromolécules par électrophorèse, le gel étant coulé sous forme liquide dans une cassette comprenant un cadre rectangulaire et une plaque de fond amovible et venant remplir l'espace délimité dans le cadre entre la plaque de fond et une membrane microporeuse préalablement fixée sur le cadre, caractérisé en ce qu'il consiste à mettre la membrane en tension de façon sensiblement uniforme en exerçant des forces de traction sur ses bords avant la coulée du gel et à maintenir la membrane sous tension pendant la solidification du gel, les forces de traction étant exercées en permanence sur deux bords opposés de la membrane, dans des directions rayonnantes à partir d'un point fixe situé sur un axe médian de la membrane, par exemple au voisinage d'un bord transversal de celle-ci.

Le procédé selon l'invention présente l'avantage que la membrane microporeuse est posée sur le cadre rectangulaire et mise sous tension avant coulée du gel liquide, ce qui est beaucoup plus simple et plus facile à réaliser que de déposer progressivement une membrane microporeuse sur une couche de gel liquide

remplissant une cassette. Selon une autre caractéristique de l'invention, le procédé consiste également à couler le gel dans la cassette par une extrémité de celle-ci, cette extrémité étant opposée à celle comprenant un peigne porté par la plaque de fond pour former dans la plaque de gel des puits de réception d'échantillons de macromolécules.

Avantageusement, l'extrémité de la cassette utilisée pour la coulée du gel est légèrement surélevée, ce qui permet de chasser progressivement l'air contenu entre la plaque de fond et la membrane au fur et à mesure de la coulée du gel, pour garantir l'absence de bulles d'air entre le gel et la membrane.

Pour faciliter la mise en tension de la membrane, le procédé selon l'invention consiste préalablement à fixer, par exemple par collage, deux barrettes longitudinalement extensibles sur les deux bords précités de la membrane, et à exercer les forces de traction precitées sur la membrane au moyen de poussoirs qui sont engagés dans des orifices desdites barrettes et sollicités élastiquement vers l'extérieur par des ressorts, les poussoirs et les ressorts étant logés dans des rainures de guidage formées dans les côtés correspondants du cadre.

La traction exercée en permanence sur les bords de la membrane permet notamment d'absorber l'allongement de la membrane résultant de son imprégnation par le gel liquide lors de la coulée de celui-ci, et garantit la planéité de la membrane.

L'invention propose également un dispositif de fabrication d'une plaque de gel à membrane microporeuse pour la séparation et le transfert de macromolécules par électrophorèse, comprenant une cassette formée d'un cadre rectangulaire et d'une plaque de fond, des moyens de fixation d'une membrane microporeuse sur le cadre et des moyens de coulée de gel liquide à l'intérieur du cadre sur la plaque de fond, les moyens de coulée étant montés à une extrémité de la cassette et comprenant un canal de passage de gel débouchant dans la cassette entre la plaque de fond et ne membrane fixée sur le cadre, caractérisé en ce que deux montants longitudinaux opposés du cadre comprennent des moyens de traction coopérant avec deux bords longitudinaux opposés de la membrane pour mettre celle-ci en tension de façon sensiblement uniforme avant la coulée du gel et en ce que les moyens de coulée du gel comprennent un réservoir porté par une plaque support destinée à être introduite à étanchéité dans une extrémité ouverte du cadre, le réservoir comportant une base cylindrique montée en rotation dans un logement cylindrique de la plaque support et formée avec un canal de sortie de gel destiné à être amené, par rotation, en communication avec un conduit de la plaque support dont les extrémités débouchent respectivement dans le logement cylindrique et à l'intérieur du cadre entre la plaque de fond et la membrane tendue.

Ce réservoir permet de doser préalablement la quantité de gel nécessaire à la fabrication d'une plaque de gel puis, par rotation sur la plaque support, d'autoriser l'écoulement dans la cassette de cette quantité dosée de gel.

La structure de ces moyens de coulée permet de plus de réaliser automatiquement un dégazage du gel et une évacuation de l'air contenu dans le canal de sortie du réservoir, avant la coulée du gel.

Les moyens de traction précités comprennent des poussoirs guidés dans des rainures des côtés précités du cadre et sollicités vers l'extérieur par des ressorts, ces poussoirs comportant des moyens d'accrochage des bords de la membrane.

Avantageusement, le dispositif comprend également des moyens agissant sur les poussoirs pour les déplacer vers l'intérieur du cadre dans le sens opposé à l'action des ressorts, dans une position permettant la pose sur la cassette d'une membrane non tendue et l'accrochage de cette membrane sur les poussoirs.

Dans un mode de réalisation préféré, le dispositif comprend une tablette de support et de positionnement de la cassette, et deux bras mobiles montés sur la tablette de part et d'autre de la cassette et portant des doigts destinés à être engagés dans les rainures de guidage des poussoirs, ces bras étant déplaçables entre une position active où les doigts sont engagés dans les rainures de guidage des poussoirs et repoussent ces derniers vers l'intérieur du cadre, et une position inactive où les doigts sont écartés des rainures de guidage des poussoirs.

Ces moyens facilitent la pose d'une membrane et son accrochage sur les moyens de traction prévus sur le cadre d'une cassette. Les deux bras mobiles permettent en effet d'amener simultanément tous les moyens de traction dans des positions prédéterminées de réception d'une membrane.

De façon générale, le procédé et le dispositif selon l'invention facilitent beaucoup la fabrication d'une plaque de gel à membrane microporeuse, de sorte que cette fabrication peut être effectuée à cadence élevée par du personnel non spécialisé, les plaques de gel ainsi fabriquées ayant des qualités homogènes et reproductibles.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en perspective d'une plaque de gel fabriquée dans une cassette selon l'invention, la membrane microporeuse étant retirée pour plus de clarté ;
- la figure 2 est une vue schématique en plan de la membrane microporeuse ;
- la figure 3 est une vue partielle en coupe, à plus grande échelle, d'un moyen de traction d'une membrane microporeuse ;
- la figure 4 est une vue partielle en coupe longitudinale des moyens de coulée de gel ;
- la figure 5 est une vue schématique partielle en coupe selon la ligne V-V de la figure 4 ;
- la figure 6 représente schématiquement deux formes de réalisation des moyens utilisés pour la pose d'une membrane sur une cassette.

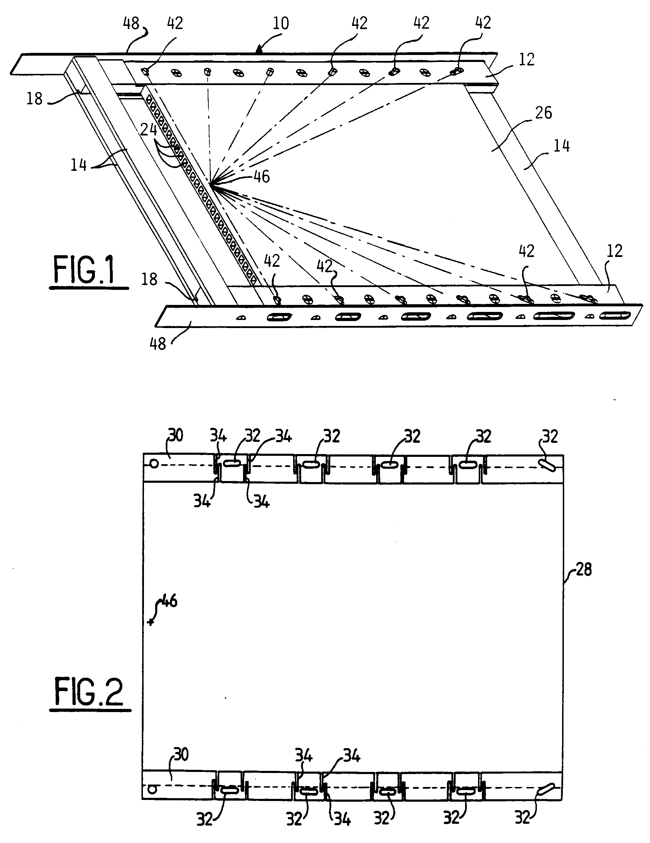

On se réfère tout d'abord aux figures 1 et 2, qui représentent respectivement une plaque de gel fabriquée dans une cassette conformément à l'invention, et la membrane microporeuse associée à cette plaque de gel.

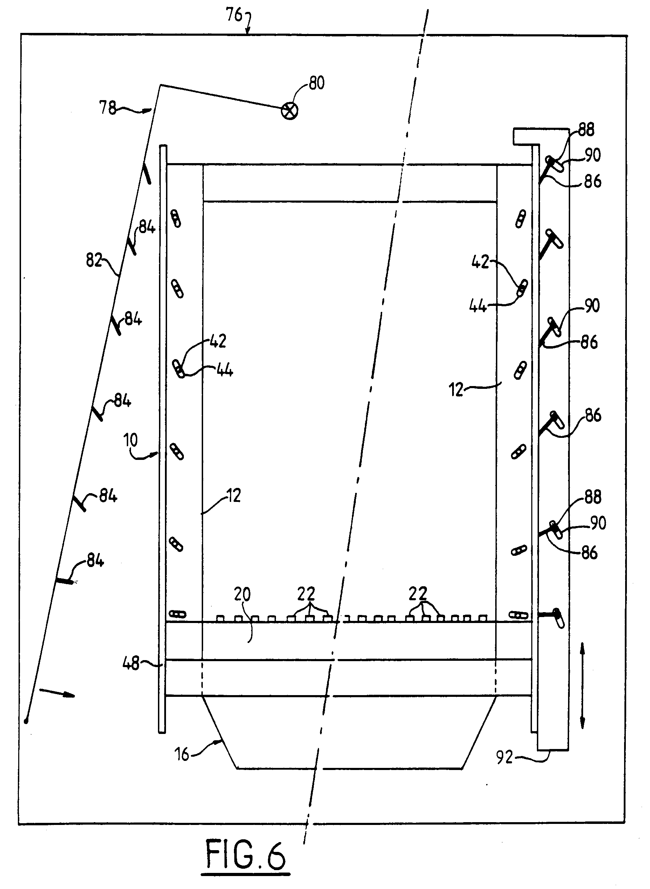

La cassette de la figure 1 comprend, comme la cassette de la Demande Internationale WO93/01491 précitée dont le contenu est incorporé ici par référence, un cadre rectangulaire 10 formé de deux montants longitudinaux 12 reliés entre eux à leurs extrémités par des barres transversales 14, et une plaque de fond amovible 16 (représentée schématiquement en figure 6) qui est guidée dans des rainures 18 des faces internes des montants longitudinaux 12 et qui est munie à l'une de ses extrémités d'un peigne 20 portant une rangée de dents 22 destinées à former des puits 24 dans la plaque de gel 26 fabriquée au moyen de la cassette, la plaque de fond 16 étant retirée de la cassette lorsqu'on utilise la plaque de gel 26 pour la séparation et le transfert de macromolécules par électrophorèse.

La membrane microporeuse 28 associée à la plaque de gel 26 est représentée en figure 2 et est formée d'un film très mince ayant par exemple une épaisseur de l'ordre de 0,15 mm, une largeur de 170 mm et une longueur de 225 mm dans un mode de réalisation particulier, sur les deux côtés longitudinaux duquel sont fixées, par exemple par collage ou par soudure, deux barrettes 30 de matière plastique ayant par exemple une épaisseur de l'ordre du millimètre et une largeur d'environ 15 mm dans un mode de réalisation particulier, et qui comprennent d'une part des orifices allongés 32 d'accrochage sur des moyens de tension de la membrane et d'autre part des fentes transversales 34 débouchant alternativement sur un bord et sur l'autre de la barrette 30 pour permettre une extension longitudinale de celle-ci.

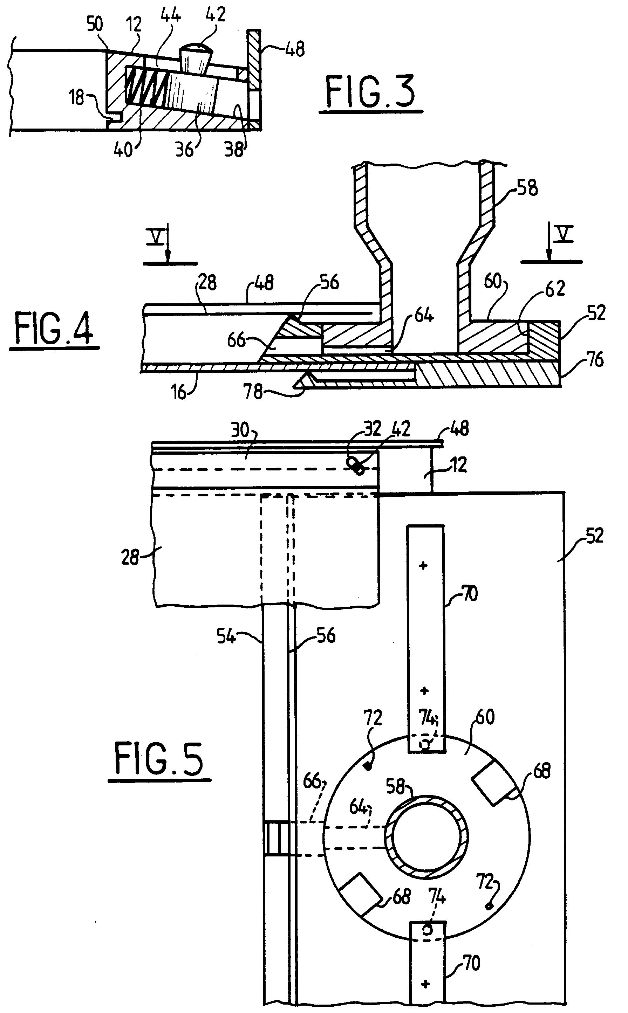

Les moyens de tension de la membrane 28 sont prévus dans les montants longitudinaux 12 du cadre 10 et comprennent, comme on le voit mieux sur la vue agrandie en coupe de la figure 3, des poussoirs 36 guidés dans des rainures 38 des montants 12 et des ressorts 40 logés dans les rainures entre le fond de celles-ci et les poussoirs 36 pour solliciter élastiquement ces derniers vers l'extérieur du cadre 10. Les poussoirs 36 comportent chacun, sur leur face supérieure, un pion 42 passant à travers une lumière allongée 44 de la face supérieure du montant 12 correspondant et destiné à être engagé dans un orifice 32 d'une barrette 30 de la membrane, pour l'accrochage de la membrane sur les moyens de tension.

Les rainures 38 et les lumières allongées 44 des montants 12 sont orientées de façon rayonnante par rapport à un point fixe 46 qui est situé sur l'axe longitudinal médian de la plaque de gel 26 et de la membrane 28, au voisinage immédiat du bord de la plaque de gel comportant les puits 24.

Les rainures 38 de guidage des poussoirs 36 débouchent à l'extérieur des montants 12 dans des orifices formés dans deux barrettes latérales 48 qui sont fixées sur les faces extérieures des montants 12.

Comme on le voit sur la vue agrandie de la figure 3, les faces supérieures des montants 12 sont inclinées transversalement vers l'extérieur et vers le bas, ainsi que les rainures 38 de guidage des poussoirs 36, de telle sorte que la membrane 28 puisse être bien appliquée sur les arêtes que forment les bords longitudinaux internes 50 des montants 12.

Pour la fabrication d'une plaque de gel conformément à l'invention, on procède de la façon suivante :

On prépare tout d'abord la membrane microporeuse 28, sur les bords longitudinaux de laquelle on fixe les barrettes 30 par collage ou par soudure, les bords longitudinaux de la membrane s'étendant approximativement le long des axes médians des barrettes 30 pour laisser libres les orifices 32 de celles-ci.

La membrane ainsi préparée est ensuite posée sur la face supérieure du cadre 10 muni de la plaque de fond 16. Les pions 42 des poussoirs 36 sont engagés dans les orifices 32 des barrettes 30 de la membrane, qui est alors mise en tension sensiblement uniforme par les ressorts 40 poussant élastiquement les poussoirs 36 vers l'extérieur. L'allongement de la membrane est de l'ordre du pour cent.

Dans ces conditions, la membrane délimite avec le cadre 10 et la plaque de fond 16 un espace correspondant exactement à la plaque de gel 26 à fabriquer et qui est ouvert uniquement à l'extrémité du cadre 10 opposée à celle obturée par le peigne 20 porté par la plaque de fond 16. C'est par cette extrémité ouverte que le gel va être coulé sous forme liquide dans cet espace, jusqu'à le remplir complètement, au moyen du dispositif représenté dans les figures 4 et 5.

Ce dispositif de coulée comprend essentiellement une plaque support 52 destinée à venir s'engager sensiblement à étanchéité dans l'extrémité ouverte du cadre 10 entre la plaque de fond 16 et la membrane 28, le bord avant transversal 54 de cette plaque support comportant une nervure supérieure 56 formant une arête sur laquelle la membrane 28 s'applique. Le dispositif de coulée comprend encore un réservoir vertical 58 sensiblement en forme d'entonnoir, comportant une base cylindrique 60 engagée avec un jeu très faible dans un logement cylindrique 62 à fond fermé de la plaque support, de telle sorte que la base 60 du réservoir puisse tourner dans ce logement autour d'un axe vertical. Une rainure radiale 64 est formée dans la face inférieure de la base cylindrique 60 du réservoir, pour faire communiquer l'intérieur de ce réservoir avec le logement cylindrique 62 formé dans la plaque support 52. Un conduit longitudinal 66 est formé dans la plaque support 52 pour établir une communication entre le logement cylindrique 62 et le bord transversal avant 54 de la plaque support.

La base 60 du réservoir 58 est maintenue dans le logement cylindrique 62 de la plaque support par un montage à baïonnette, au moyen de deux encoches 68 diamétralement opposées formées dans la périphérie de la base 60 du réservoir, et de deux doigts 70 fixés en alignement sur la face supérieure de la plaque support 52, de part et d'autre de l'axe du logement cylindrique 62, les extrémités en regard des doigts 70 s'étendant au-dessus et vers l'intérieur du logement cylindrique 62 sur des distances inférieures aux dimensions des encoches 68 de la base du réservoir.

Ce dispositif de coulée est utilisé de la façon suivante :

Le réservoir 58 est tout d'abord monté sur la plaque support 52, sa base cylindrique 60 étant amenée dans le logement cylindrique 62 avec les encoches 68 alignées sur les extrémités des doigts 70, puis on fait tourner la base 60 du réservoir dans le logement cylindrique 62 de façon à ce que les extrémités des doigts 70 s'appliquent élastiquement sur la face supérieure de la base 60 du réservoir et la maintiennent fermement dans le logement cylindrique 62. Des crans 72, 74 sont avantageusement formés sur la face supérieure de la base 60, pour recevoir une saillie de forme correspondante prévue à l'extrémité des doigts 70 et déterminer de façon précise deux positions angulaires du réservoir 58 autour de son axe, la première position angulaire définie par les crans 72 étant telle que la rainure 64 n'est pas alignée avec le conduit 66 et est obturée par la paroi du logement cylindrique 62, la seconde position angulaire définie par les crans 74 étant telle que la rainure 64 est alignée avec le conduit 66 pour permettre à du gel liquide contenu dans le réservoir 58 de s'écouler à l'intérieur de la cassette.

Lorsque le réservoir 58 a été ainsi monté sur la plaque de fond 52 et amené dans la position angulaire définie par les crans 72 dans laquelle la rainure 64 est obturée, la plaque support 52 est montée dans l'extrémité ouverte de la cassette comme représenté dans les figures 4 et 5.

Avantageusement, une plaque 76 comportant des doigts longitudinaux 78 élastiquement déformables, peut être fixée sous la plaque support 52 de telle sorte que les doigts 78 s'appuient élastiquement sur la face inférieure de la plaque de fond 16 pour maintenir le dispositif de coulée en place sur la cassette.

La membrane 28 peut être montée sur le cadre 10 avant ou après montage du dispositif de coulée sur le cadre.

Lorsque l'ensemble cassette-dispositif de coulée est posé sur une surface de support horizontale, l'extrémité de la cassette comportant le dispositif de coulée est légèrement plus haute que son extrémité opposée comportant le peigne 20, en raison de la présence de la plaque de fixation 76, ce qui crée une faible pente descendante en direction du peigne 20.

Une quantité dosée de gel liquide (par exemple d'agarose ou de polyacrylamide) est versée dans le réservoir 58 et vient remplir la rainure 64, en chassant l'air contenu dans cette rainure par le jeu faible entre la périphérie de la base 60 et la paroi cylindrique du logement 62, ce jeu ayant par exemple une valeur de l'ordre de 0,01 mm ce qui permet à l'air de s'échapper tout en interdisant le passage du gel liquide.

Il suffit ensuite de tourner le réservoir 58 autour de son axe et de l'amener dans la seconde position angulaire définie par les crans 74, pour que le gel liquide puisse s'écouler du réservoir à l'intérieur de la cassette en passant par la rainure 64 et le conduit 66.

Le gel liquide vient ainsi remplir progressivement l'espace défini dans le cadre 10 entre la plaque de fond 16 et la membrane tendue 28. L'air contenu dans cet espace est progressivement évacué entre la membrane 28 et la nervure 56 de la plaque support 52. Au cours de son imprégnation par le gel liquide, la membrane 28 a tendance à s'allonger, et cet allongement est automatiquement repris au fur et à mesure par les moyens de tension constitués par les poussoirs 36 et les ressorts associés 40.

Lorsque le gel liquide a rempli l'espace défini dans le cadre 10 entre la plaque de fond 16 et la membrane tendue 28, il monte sur le bord transversal avant 54 de la plaque support 52, ce bord avant 54 étant biseauté pour faciliter l'évacuation de l'air, et il vient affleurer la nervure 56 sur laquelle s'applique la membrane 28 mouillée par le gel. On arrête alors la coulée du gel, s'il en reste encore dans le réservoir 58, par rotation de ce réservoir pour l'amener dans sa première position angulaire définie par les crans 72, et on laisse solidifier le gel, par refroidissement à température ambiante (gel d'agarose) ou par polymérisation (gel de polyacrylamide).

Lorsque le gel est solidifié, on retire le dispositif de coulée de l'extrémité de la cassette dans laquelle il était engagé.

Pour utiliser ensuite la plaque de gel revêtue de la membrane, on dispose l'ensemble cadre 10 - plaque de gel 26 - membrane 28 verticalement dans une cuve d'électrophorèse, on retire la plaque de fond 16 et on dépose des échantillons de macromolécules dans les puits 24 de la plaque de gel.

On constate que le procédé et le dispositif selon l'invention permettent à du personnel non spécialisé de fabriquer rapidement des plaques de gel à membrane microporeuse ayant une très bonne qualité, parfaitement reproductible.

Cette fabrication peut être encore facilitée par usage de l'outillage représenté schématiquement en figure 6, qui permet une fixation simple, rapide et aisée de la membrane sur le cadre 10 de la cassette.

Cet outillage comprend une tablette de support 76 comportant des moyens de positionnement (non représentés) du cadre 10 muni de la plaque de fond 16. Cette tablette 76 est équipée de moyens permettant de repousser vers l'intérieur du cadre les moyens de tension de la membrane, de telle sorte qu'il suffit alors de poser la membrane 28 munie de ses deux barrettes 30 sur le dessus du cadre, pour que les pions 42 des moyens de tension s'engagent dans les orifices 32 des barrettes.

Ces moyens permettant de déplacer les moyens de tension, c'est-à-dire les poussoirs 36, vers l'intérieur du cadre en comprimant les ressorts associés 40, peuvent être de différentes formes. Sur la partie gauche de la figure 6, on a représenté un levier coudé 78 articulé autour d'un axe 80 et dont un bras 82 s'étend le long d'un montant 12 du cadre, à l'extérieur de celui-ci, et porte des doigts obliques 84 qui viennent s'engager dans les rainures 38 de guidage des poussoirs 36 quand on fait pivoter le levier 78 autour de l'axe 80 dans le sens contraire des aiguilles d'une montre. Les longueurs des doigts 84 sont telles que, quand le bras 82 du levier est appliqué sur le cadre, les pions 42 des poussoirs sont automatiquement amenés dans une position d'engagement dans les orifices 32 d'une barrette 30 d'une membrane.

En variante, on peut utiliser les moyens représentés sur la partie droite de la figure 6, qui comprennent des doigts mobiles 86 guidés en translation dans le prolongement des rainures 38 recevant les poussoirs 36, ces doigts 86 comportant à leur extrémité extérieure un téton 88 engagé dans une rainure de guidage 90 d'une tirette 92 s'étendant le long d'un montant 12 du cadre 8. Les orientations des rainures 90 de la tirette 92 sont telles que, quand la tirette est déplacée dans un sens le long du montant 12 du cadre, les doigts 86 sont introduits dans les rainures de guidage 38 des poussoirs 36 et déplacent ces derniers vers l'intérieur du cadre et, quand la tirette 92 est déplacée dans l'autre sens, les doigts 86 sont sortis des rainures 38 de guidage des poussoirs 36.

## Revendications

1. Procédé de fabrication d'une plaque de gel à membrane microporeuse pour la séparation et le transfert de macromolécules par électrophorèse, le gel étant coulé sous forme liquide dans une cassette comprenant un cadre rectangulaire (10) et une plaque de fond (16) amovible et venant remplir l'espace délimité dans le cadre (10) entre la plaque de fond et une membrane microporeuse (28) préalablement fixée sur le cadre (10), caractérisé en ce qu'il consiste à mettre la membrane (28) en tension de façon sensiblement uniforme en exerçant des forces de traction sur ses bords avant la coulée du gel et à maintenir la membrane (28) sous tension pendant la solidification du gel, les forces de traction étant exercées en permanence sur deux bords opposés de la membrane (28), dans des directions rayonnantes à partir d'un point fixe (46) situé sur un axe médian de la membrane, par exemple au voisinage d'un bord transversal de celle-ci.

2. Procédé selon la revendication 1, caractérisé en ce qu'il consiste à couler le gel dans la cassette par une extrémité de celle-ci, cette extrémité étant opposée à celle comprenant un peigne (20) porté par la plaque de fond (16) pour former dans la plaque de gel des puits (24) de réception d'échantillons de macromolécules.

3. Procédé selon la revendication 1 ou 2, caractérisé en ce qu'il consiste préalablement à fixer, par exemple par collage, deux barrettes (30) longitudinalement extensibles sur les deux bords précités de la membrane (28), et à exercer les forces de traction sur la membrane au moyen de poussoirs (36, 42) engagés dans des orifices (32) desdites barrettes et sollicités élastiquement vers l'extérieur par des ressorts (40), les poussoirs et les ressorts étant logés dans des rainures de guidage (38) formées dans les montants correspondants (12) du cadre.

4. Dispositif de fabrication d'une plaque de gel à membrane microporeuse pour la séparation et le transfert de macromolécules par électrophorèse, comprenant une cassette formée d'un cadre rectangulaire (10) et d'une plaque de fond (16), des moyens de fixation d'une membrane microporeuse (28) sur le cadre (10) et des moyens de coulée de gel liquide à l'intérieur du cadre sur la plaque de fond, les moyens de coulée (52, 58) étant montés à une extrémité de la cassette et comprenant un canal (64, 66) de passage de gel débouchant dans la cassette entre la plaque de fond (16) et une membrane (28) fixée sur le cadre, caractérisé en ce que deux montants longitudinaux opposés (12) du cadre comprennent des moyens de traction (36, 40, 42) coopérant avec deux bords longitudinaux opposés de la membrane (28) pour mettre celle-ci en tension de façon sensiblement uniforme avant la coulée du gel et en ce que les moyens de coulée du gel comprennent un réservoir (58) porté par une plaque support (52) destinée à être introduite à étanchéité dans une extrémité ouverte du cadre (10), le réservoir comportant une base cylindrique (60) montée à rotation dans un logement cylindrique (62) de la plaque support et formée avec un canal (64) de sortie de gel destiné à être amené, par rotation, en communication avec un conduit (66) de la plaque support dont les extrémités débouchent respectivement dans le logement cylindrique (62) et à l'intérieur du cadre entre la plaque de fond (16) et la membrane (28) tendue.

5. Dispositif selon la revendication 4, caractérisé en ce que les moyens de traction comprennent des poussoirs (36) guidés dans des rainures (38) des montants précités du cadre et sollicités vers l'extérieur par des ressorts (40), les poussoirs comportant des moyens (42) d'accrochage des bords de la membrane (28).

6. Dispositif selon la revendication 5, caractérisé en ce que les poussoirs (36) comportent des pions (42) destinés à être introduits dans des orifices (32) formés dans des barrettes (30) longitudinalement extensibles, qui sont fixées sur les bords précités de la membrane (28).

7. Dispositif selon la revendication 5 ou 6, caractérisé en ce qu'il comprend des moyens (78, 82 ; 84, 86-92) agissant sur les poussoirs (36) pour les déplacer vers l'intérieur du cadre, dans le sens opposé à l'action des ressorts (40), dans une position permettant la pose sur la cassette d'une membrane (28) non tendue, et l'accrochage de cette membrane sur les poussoirs.

8. Dispositif selon la revendication 7, caractérisé en ce qu'il comprend une tablette (76) de support et de positionnement de la cassette, et deux bras (78, 92) mobiles montés sur la tablette de part et d'autre de la cassette et portant des doigts (84, 86) destinés à être engagés dans les rainures (38) de guidage des poussoirs, ces bras étant déplaçables entre une position active où les doigts sont engagés dans les rainures de guidage des poussoirs et repoussent ces derniers vers l'intérieur du cadre, et une position inactive où les doigts sont écartés des rainures de guidage des poussoirs.

9. Dispositif selon l'une des revendications 4 à 8, caractérisé en ce que la plaque de fond amovible (16) de la cassette comprend, à l'une de ses extrémités, un peigne (20) de formation de puits (24) dans la plaque de gel, ce peigne obturant à étanchéité l'extrémité du cadre (10) opposée à celle recevant les moyens de coulée.

## Claims

1. A method of making a gel plate with a microporous membrane for separating and transferring macromolecules by electrophoresis, the gel being poured in liquid form into a cassette comprising a rectangular frame (10) and a removable bottom plate (16), and filling the space defined in the frame (10) between the bottom plate and a microporous membrane (28) previously fixed on the frame (10), the method being characterized in that the method consists in putting the membrane (28) under tension in substantially uniform manner by exerting traction forces on its edges before pouring in the liquid gel and keeping the membrane (28) under tension during solidification of the gel, the traction forces being applied continuously to two opposite edges of the membrane (28) in directions radiating from a fixed point (46) located on a median axis of the membrane, for example in the vicinity of a transverse edge thereof.

2. A method according to claim 1, characterized in that it consists in pouring the gel into the cassette via one end thereof, this end being opposite the end having a comb (20) on the bottom plate (16) for forming wells in the gel plate for receiving samples of macromolecules.

3. A method according to claim 1 or 2, characterized in that it consists initially in fixing two extensible longitudinal strips (30) on the two said sides of the membrane (28), for example by adhesive, and in exerting the traction forces on the membrane by means of pushers (36, 42) engaged in holes (32) in said strips and urged resiliently outwards by springs (40), the pushers and the springs being fitted in guide grooves (38) formed in corresponding rails (12) of the frame.

4. Apparatus for making a gel plate with a microporous membrane for separation and transfer of macromolecules by electrophoresis, the apparatus comprising a cassette formed by a rectangular frame (10) and a bottom plate (16), fixing means for fixing a microporous membrane (28) on the frame (10), and gel pouring means for pouring liquid gel into the interior of the cassette onto the bottom plate, the pouring means (52, 58) being mounted at one end of the cassette and comprising a channel (64, 66) for the gel opening into the cassette between the bottom plate (16) and a membrane (28) fixed on the frame, the apparatus being characterized in that two opposite longitudinal rails (12) of the frame comprise traction means (36, 40, 42) which cooperate with two opposite longitudinal edges of the membrane (28) for placing the latter under tension in substantially uniform manner, before pouring in the gel, and in that the gel pouring means comprise a tank (58) carried by a support plate (52) for sealed introduction into one open end of the frame (10), the tank comprising a cylindrical bottom part (60) mounted to rotate in a cylindrical seat (62) of the support plate and formed with an outlet channel (64) for the gel adapted to be placed by rotation in communication with a duct (66) in the support plate, the ends of the duct opening respectively into the cylindrical housing (62) and the interior of the frame between the bottom plate (16) and the tensioned membrane (28).

5. Apparatus according to claim 4, characterized in that the traction means comprise pushers (36) guided in grooves (38) in said rails and urged towards the outside by springs (40), the pushers including means (42) for engaging the edges of the membrane (28).

6. Apparatus according to claim 5, characterized in that the pushers (36) comprise lugs (42) adapted to be fitted into holes (32) formed in longitudinally extensible strips (30), which are fixed on the aforesaid edges of the membrane (28).

7. Apparatus according to claim 5 or 6, characterized in that it comprises means (78, 82; 84, 86-92) acting on the pushers (36) for shifting them towards the interior of the frame, against the action of the springs (40), into a position allowing a non-tensioned membrane (28) to be placed on the cassette and the engagement of this membrane on the pushers.

8. Apparatus according to claim 7, characterized in that it comprises a support table (76) for positioning the cassette and two movable arms (78, 92) mounted on the table on either side of the cassette and carrying fingers (84, 86) adapted to be engaged in the guide grooves (38) of the pushers, these arms being movable between an active position in which the fingers are engaged in the guide grooves of the pushers and push them towards the interior of the cassette, and an inactive position in which the fingers are retracted from the guide grooves of the pushers.

9. Apparatus according to any one of claims 4 to 8, characterized in that the removable bottom plate (16) of the cassette comprises, at one of its ends, a comb (20) for forming wells (24) in the gel plate, this comb closing the end of the frame (10) opposite the end receiving the pouring means in sealed manner.

## Patentansprüche

1. Verfahren zur Herstellung einer Gelplatte mit mikro-poröser Membrane für die Trennung und die Verlagerung von Makromolekülen durch Elektrophorese, wobei das Gel in flüssiger Form in eine Kassette, die einen rechteckigen Rahmen (10) und eine auswechselbare bzw. abnehmbare Bodenplatte (16) umfaßt, laufen gelassen wird und den Raum, der in dem Rahmen (10) zwischen der Bodenplatte und einer vorher auf dem Rahmen (10) befestigten mikroporösen Membrane (28) begrenzt ist, ausfüllt, dadurch **gekennzeichnet**, daß es darin besteht, die Membrane (28) in im wesentlichen gleichförmiger Art und Weise unter Spannung zu setzen, in dem Zugkräfte auf ihre Ränder vor dem Ausströmen des Gels ausgeübt werden und die Membrane (28) während der Verfestigung des Gels unter Spannung gehalten wird, wobei die Zugkräfte dauernd auf zwei entgegengesetzte Ränder der Membrane (28) in Richtungen ausgeübt werden, die von einem festen Punkt (46), der sich auf einer Mittelachse der Membrane, z.B. in der Nähe eines Querrands derselben, befindet, ausstrahlen.

2. Verfahren gemäß Anspruch 1, dadurch **gekennzeichnet**, daß es darin besteht, das Gel in die Kassette durch ein Ende derselben laufen zu lassen, wobei dieses Ende entgegengesetzt jenem ist, das einen von der Bodenplatte (16) getragenen Kamm (20) zum Bilden von Vertiefungen (24) für die Aufnahme von Proben von Makromolekülen in der Gelplatte enthält.

3. Verfahren gemäß Anspruch 1 oder 2, dadurch **gekennzeichnet**, daß es darin besteht, vorher, z.B. durch Kleben, zwei längs verlängerbare Stäbchen (30) auf den beiden vorgenannten Rändern der Membrane (28) zu befestigen, und die Zugkräfte auf die Membrane mittels Drückern (36, 42) auszuüben, welche mit den Öffnungen (32) der Stäbchen in Eingriff und durch Federn (40) elastisch nach dem Äußeren zu belastet sind, wobei die Drücker und die Federn in Führungsnuten (38) untergebracht sind, welche in entsprechenden Stäben bzw. Ständern (12) des Rahmens ausgebildet sind.

4. Vorrichtung zur Herstellung einer Gelplatte mit mikroporöser Membrane für die Trennung und die Verlagerung von Makromolekülen durch Elektrophorese, umfassend eine von einem rechteckigen Rahmen (10) und einer Bodenplatte (16) gebildete Kassette, Mittel zur Befestigung einer mikroporösen Membrane (28) auf dem Rahmen (10) und Mittel zum Ausströmen von flüssigem Gel in das Innere des Rahmens auf die Bodenplatte, wobei die Mittel zum Ausströmen (52, 58) an einem Ende der Kassette angebracht sind und einen Kanal (64, 66) für den Durchgang von Gel umfassen, der zwischen der Bodenplatte (16) und einer auf dem Rahmen befestigten Membrane (28) in der Kassette mündet, dadurch **gekennzeichnet**, daß zwei gegenüberliegende bzw. entgegengesetzte Längsständer bzw. -stäbe (12) des Rahmens Zugmittel (36, 40, 42) umfassen, die mit zwei entgegengesetzten bzw. gegenüberliegenden Längsrändern der Membrane (28) zusammenwirken, um dieselbe in im wesentlichen gleichförmiger Art und Weise vor dem Ausströmen des Gels unter Spannung zu setzen, und daß die Mittel für das Ausströmen des Gels ein Reservoir (58) umfassen, welches von einer Halteplatte (52) getragen ist, die dazu bestimmt ist, mit Dichtigkeit in ein offenes Ende des Rahmens (10) eingeführt zu werden, wobei das Reservoir eine zylindrische Basis (60) hat, die zur Rotation in einer zylindrischen Unterbringung bzw. Lagerung (62) der Halteplatte angebracht und mit einem Kanal (64) für den Austritt des Gels ausgebildet ist, der dazu bestimmt ist, durch Rotation in Verbindung mit einem Kanal (66) der Halteplatte gebracht zu werden, dessen Enden in die zylindrische Unterbringung bzw. Lagerung (62) bzw. in das Innere des Rahmens zwischen der Bodenplatte (16) und der gespannten Membrane (28) münden.

5. Vorrichtung gemäß Anspruch 4, dadurch **gekennzeichnet**, daß die Zugmittel Drücker (36) umfassen, die in Nuten (38) der vorgenannten Ständer bzw. Stäbe des Rahmens geführt und nach dem Äußeren durch Federn (60) belastet sind, wobei die Drücker Mittel (42) für das Anhaken der Ränder der Membrane (28) umfassen.

6. Vorrichtung gemäß Anspruch 5, dadurch **gekennzeichnet**, daß die Drücker (36) Blöcke (42) haben, die dazu bestimmt sind, in Öffnungen (32) eingefügt zu werden, welche in längs verlängerbaren Stäbchen (30) ausgebildet sind, die auf den vorgenannten Rändern der Membrane (28) befestigt sind.

7. Vorrichtung gemäß Anspruch 5 oder 6, dadurch **gekennzeichnet**, daß sie Mittel (78, 82; 84, 86-92) umfaßt, welche auf die Drücker (36) einwirken, um diese nach dem inneren des Rahmens zu in dem der Wirkung der Federn (40) entgegengesetzten Sinn in eine Position zu verlagern, welche das Legen einer nichtgespannten Membran (28) auf die Kassette und das Anhaken dieser Membrane auf den Drückern gestattet.

8. Vorrichtung gemäß Anspruch 7, dadurch **gekennzeichnet**, daß sie eine Tafel (76) für das Tragen und die Positionierung der Kassette umfaßt, und zwei bewegliche Arme (78, 92), die auf der Tafel beiderseits der Kassette angebracht sind und Zapfen (84, 86) tragen, welche dazu bestimmt sind, in die Nuten (38) für die Führung der Drücker in Eingriff gebracht zu werden, wobei diese Arme zwischen einer aktiven Position, worin die Zapfen in den Nuten für die Führung der Drücker in Eingriff sind und diese letzteren nach dem Inneren des Rahmens hin zurückdrücken, und einer inaktiven Position, worin die Zapfen aus den Nuten für die Führung der Drücker entfernt sind, verlagerbar sind.

9. Vorrichtung gemäß einem der Ansprüche 4 bis 8, dadurch **gekennzeichnet**, daß die auswechselbare bzw. abnehmbare Bodenplatte (16) der Kassette an dem einen ihrer Enden einen Kamm (20) für die Ausbildung von Vertiefungen (24) in der Gelplatte enthält, wobei dieser Kamm mit Dichtigkeit das Ende des Rahmens (10), welches jenem entgegengesetzt ist, der die Mittel für das Ausströmen aufnimmt, verschließt.
